# EUROPÄISCHE PATENTSCHRIFT

(11) **EP 3 592 561 B1**
(45) Veröffentlichungstag und Bekanntmachung des Hinweises auf die Patenterteilung: **28.04.2021**
(21) Anmeldenummer: 18707234.3
(22) Anmeldetag: 13.02.2018
(51) Int. Cl.: B33Y 50/02, B29C 64/393, B29C 64/118

(54) **VERFAHREN ZUR ADDITIVEN FERTIGUNG EINES DREIDIMENSIONALEN GEGENSTANDES**
METHOD FOR ADDITIVE MANUFACTURE OF A THREE-DIMENSIONAL OBJECT
PROCÉDÉ DE FABRICATION ADDITIVE D'UN OBJET TRIDIMENSIONNEL

(30) Priorität: 07.03.2017 DE 102017104738
(43) Veröffentlichungstag der Anmeldung: 15.01.2020
(73) Patentinhaber: Ruhr-Universität Bochum, 44801 Bochum (DE)
(72) Erfinder: RIEGER, Michael, 67454 Hassloch (DE); JOHNEN, Benjamin, 44137 Dortmund (DE); KUHLENKÖTTER, Bernd, 48317 Rinkerode (DE)
(74) Vertreter: Griepenstroh, Jörg
(86) Internationale Anmeldenummer: PCT/DE2018/100123
(87) Internationale Veröffentlichungsnummer: WO 2018/161994

(56) Entgegenhaltungen:
- DONGHONG DING ET AL: "Automatic multi-direction slicing algorithms for wire based additive manufacturing", ROBOTICS AND COMPUTER INTEGRATED MANUFACTURING., Bd. 37, 1. Februar 2016 (2016-02-01), Seiten 139-150, XP055467297, GB ISSN: 0736-5845, DOI: 10.1016/j.rcim.2015.09.002
- BIN HUANG ET AL: "Curved Layer Adaptive Slicing (CLAS) for fused deposition modelling", RAPID PROTOTYPING JOURNAL, Bd. 21, Nr. 4, 15. Juni 2015 (2015-06-15), Seiten 354-367, XP055371962, GB ISSN: 1355-2546, DOI: 10.1108/RPJ-06-2013-0059
- MICHAEL RIEGER ET AL: "Analysis and Development of the Fused Layer Manufacturing Processusing Industrial Robots", PROCEEDINGS OF ISR 2016: 47ST INTERNATIONAL SYMPOSIUM ON ROBOTICS, MUNICH, GERMANY, 5. September 2016 (2016-09-05), - 22. Juni 2016 (2016-06-22), Seiten 652-659, XP055467767, DE ISBN: 978-3-8007-4231-8

## Beschreibung

Die Erfindung betrifft ein Verfahren zur additiven Fertigung eines dreidimensionalen Gegenstandes gemäß den Merkmalen des Patentanspruchs 1.

Heutige additive Fertigungsverfahren bauen die zu fertigenden Geometrien in der Regel in horizontalen, ebenen und parallelen Schichten auf. Die Art des schichtweisen Modellaufbaus am Markt verfügbarer Systeme steht in Zusammenhang mit der kinematischen Beschränkung der Bewegungskinematiken, die den additiven Prozesskopf führen, der den Aufbau des Gegenstands element- oder schichtweise umsetzt. Im Falle des additiven Fertigungsverfahrens Fused-Layer Manufacturing wird als Teil des Prozesskopfs ein in den flüssigen oder pastösen Zustand versetztes Ausgangsmaterial über eine Düse abgegeben. Das Ausgangsmaterial erstarrt nach der Extrusion aus der Düse. Die Bewegungskinematiken sind in der Regel mit drei linearen Bewegungsachsen ausgestattet, sog. lineare Portalkinematiken, was eine Orientierungsmöglichkeit des Prozesskopfs im Prozess verhindert. Mit diesen drei Freiheitsgraden ist es lediglich möglich, den Prozesskopf im Prozessverlauf in den drei Raumrichtungen zu positionieren, aber nicht zu orientieren. Dabei sind auch nur zwei der drei Bewegungsachsen, welche eine horizontale Ebene aufspannen, für eine synchrone, kontinuierliche Bahnsteuerung ausgelegt. Außerdem sind Geometriezerlegungs- und Bahnplanungsverfahren zur Planung der Bewegungsbahn des Prozesskopfs und zur Ansteuerung der Bewegungsachsen auf diese Kinematiken angepasst und ausgelegt. Bekannte Geometriezerlegungsstrategien konzentrieren sich auf die Erzeugung des beschriebenen einfachen Schichtzerlegungs- bzw. Schichtaufbaumusters, bei dem im Rahmen eines additiven Fertigungsprozesses die Führung des Prozesskopfes mit einer linearen Portalkinematik einfach planbar und umsetzbar ist.
Bei Übergängen, zum Beispiel durch Löcher oder Vorsprünge, stoßen bekannte Geometriezerlegungsstrategien an ihre Grenzen, wenn keine Stützstrukturen angewendet werden sollen

Die Veröffentlichung "Automatic multi-direction slicing algorithms for wire based additive manufacturing" von Ding D. et al. in Robotics and Computer-Integrated Manufacturing 37 (2016) 139-150 offenbart eine Geometriezerlegungsstrategie, welche viele Richtungen berücksichtigt und besonders vorteilhaft bei Geometrien mit vielen Löchern anwendbar ist.

Der Erfindung liegt die Aufgabe zugrunde, ein Verfahren zur additiven Fertigung eines dreidimensionalen Gegenstandes durch einzelne, frei geformte Schichten aufzuzeigen, wobei deren Aufbau und Anordnung eine Modellierung des Bauteils ohne Stützstrukturen zulässt.
Diese Aufgabe ist durch ein Verfahren mit den Merkmalen des Patentanspruchs 1 gelöst.
Vorteilhafte Weiterbildungen der Erfindung sind Gegenstand der Unteransprüche.
Das erfindungsgemäße Verfahren zur additiven Fertigung eines dreidimensionalen Gegenstandes sieht zunächst die Bereitstellung eines digitalen Modells des zu modellierenden Bauteils vor. Das digitale Modell kann sowohl ein diskretisiertes Voxelmodell sein als auch ein parametrisches Modell, das erforderlichenfalls bereichsweise diskretisiert werden kann. Auf einer Oberfläche des digitalen Modells wird wenigstens eine Startfläche oder es werden auch mehrere Startflächen festgelegt. Eine Startfläche ist der Ausgangspunkt, auf welchem beginnend eine schichtweise Unterteilung des Modells erfolgt. Die Schichten werden nacheinander zu dem dreidimensionalen Gegenstand aufgebaut.

Das erfindungsgemäße Verfahren zeichnet sich dadurch aus, dass die Lage und Anordnung der Schichten durch die Bestimmung eines Distanzfeldes berechnet werden. Dabei wird jedem Punkt des Modellvolumens die kürzeste Distanz zur nächstgelegenen Startfläche innerhalb des Modellvolumens zugeordnet. Anschließend werden mehrere, aufeinander aufbauende Flächen bestimmt, wobei alle Punkte der jeweiligen Flächen den gleichen Abstand zur nächstgelegenen Startfläche besitzen. Flächen mit dem besagten gleichen Abstand zur nächstgelegenen Startfläche werden als Isoflächen bezeichnet. Jede Isofläche besitzt wiederum einen konstanten Abstand zu der vorangegangenen Isofläche und im Falle der ersten Isofläche zur Startfläche. Aus den Isoflächen werden im Kontext der Erfindung die Schichten des additiven Fertigungsprozesses gebildet. Abhängig von einem gewählten Parameter können mehrere Isoflächen zu einer Schicht zusammengefasst werden.

Die Form und Verteilung der Isoflächen und Schichten adaptieren sich an die Form des digitalen Modells, wobei die Distanzwerte der Isoflächen eine Reihenfolge, beginnend mit dem niedrigsten Distanzwerten in aufsteigender Reihenfolge, definieren und sich daraus die Reihenfolge der Schichten für den additiven Aufbau ableitet.

Für jeden diskreten Punkt einer durch ein Distanzfeld definierten Isofläche oder Schicht wird eine Orientierung des Prozesskopfs bestimmt. Die Zuordnung der Orientierung erfolgt dadurch, indem entweder die Flächennormale der Schicht berechnet wird oder die Gradientenvektoren des Distanzfeldes berechnet werden, welche für den diskreten Punkt die Richtung des steilsten Anstiegs der Distanzen zeigen.

Die Erfindung basiert auf der Grundüberlegung, dass die Bauteilgeometrie in freigeformte, dreidimensionale Isoflächen bzw. Schichten eingeteilt wird, wodurch in der Umsetzung der sequentiellen Schichtbildung zur Modellierung des Bauteils auf Stützstrukturen verzichtet werden kann. Durch Ableitung von Bewegungsbahnen für 5- oder mehrachsige Bewegungskinematiken kann ein Volumenkörper mittels additiver Fertigungsverfahren, deren Prozessköpfe sich zur Führung mit solchen Kinematiken eignen und die eine lokale Verfestigung ermöglichen, erstellt werden. Die Bahnplanung zur Umsetzung der freigeformten Schichten kann mit etablierten Methoden zur Umsetzung üblicher Bahnmuster für außenliegende Hüll- und innenliegende Füllstrukturen erfolgen.

Das erfindungsgemäße Verfahren und die Methodik zur Geometriezerlegung sowie die Bahnplanung ermöglicht es, ein weites Spektrum an Bauteilen ohne Stützstrukturen aufzubauen. Dies hat folgende wesentliche Vorteile:
Die Vermeidung der Notwendigkeit von Stützstrukturen verringert die Produktionszeit zur Herstellung von additiv gefertigten Bauteilen, da Stützstrukturen erst gar nicht gefertigt werden müssen. Außerdem entfällt die aufwendige Entfernung der Stützstrukturen. Darüber hinaus entfällt der Einsatz von Ressourcen für notwendige Stützstrukturen und Produktionsmitteln zu deren Herstellung und Entfernung.

Es sind zudem Bauteile mit abgeschlossenen Hohlräumen herstellbar, aus denen bei anderen Verfahren, abhängig vom Prozess und den eingesetzten Werkstoffen, keine Stützmaterialien entfernbar sind.

Das erfindungsgemäße Verfahren ermöglicht eine automatisierte Berechnung einer Geometriezerlegung, aus der Bewegungsbahnen zur Führung eines Prozesskopfes bei einer nichtebenen Druckoberfläche erzeugt werden können. Neben dem herzustellenden Bauteilvolumen können auch Bauteiloberflächen, auf die appliziert werden soll, bei dem erfindungsgemäßen Verfahren grundsätzlich freigeformt sein und eine freie Lage im Raum annehmen.

Das erfindungsgemäße Verfahren zur Geometriezerlegung und Prozessbahngenerierung kann auf verschiedene additive Fertigungsverfahren, die auf einem element- oder schichtweisen Modellaufbau basieren, angewendet werden, wie zum Beispiel Fused-Layer Manufacturing. Die mit dem Verfahren kombinierten additiven Fertigungsprozesse können unter anderem zur Herstellung von Prototypen, Serienprodukten und Werkzeugen eingesetzt werden (Rapid Prototyping, Rapid Manufacturing und Rapid Tooling).

Insbesondere eignet es sich für den Einsatz bei Produkten, die einen großen Umfang an Stützstrukturen in der konventionellen Anwendung erforderlich machen. Außerdem wird es möglich, durch beliebige Orientierung des Prozesskopfes Materialvolumen an bestehende Objekte anzufügen. Somit eignet sich das erfindungsgemäße Verfahren auch für die Reparatur von Bauteilen, an denen entsprechende Reparaturvolumen angefügt werden müssen. Diese Objekte können zudem eine variable Lage einnehmen und freigeformt sein.

In einer Weiterbildung der Erfindung kann, bei der Gefahr von Kollisionen mit dem Prozesskopf oder der Bewegungskinematik, für bestimmte diskrete Punkte die Richtung ihrer Orientierungsvektoren modifiziert werden, indem Scheitelpunkte bestimmt werden, an denen die bisher ermittelten Orientierungsvektoren benachbarter diskreter Punkte aufeinander zu zeigen. Zeigen die Orientierungsvektoren aufeinander bedeutet dies, dass bei sich verringerndem Abstand der Isoflächen irgendwann nicht genügend Platz für den Prozesskopf verbleibt. Die Richtungen der Orientierungsvektoren der diskreten Punkte werden relativ zu den Scheitelpunkten gedreht, wobei der Anteil der Umorientierung in Abhängigkeit der Distanz zum jeweiligen Scheitelpunkt gewählt wird. Mit zunehmender Distanz vom Scheitelpunkt nimmt der Anteil der Umorientierung ab.

In einer Weiterbildung der Erfindung ist zur Vermeidung einer Kollision eines verwendeten Prozesskopfes für die additive Fertigung mit einem bereits modellierten Bauteilvolumen die Schichtbildung anzupassen, indem überprüft wird, ob es gegenläufige Orientierungsvektoren gibt, wodurch nicht nur diskrete Punkte sondern ganze Schichten aufeinander zu laufen und eine Auftrefffläche bilden würden.

Bei einer vorhandenen Auftrefffläche wird das Distanzfeld unabhängig von der Distanzfunktion lokal modifiziert. Dazu wird eine orthogonal zur Auftrefffläche angeordnete Hilfsfläche bestimmt, welche durch eine Kante eines das digitale Modell der Auftrefffläche umgebenden Hüllkörpers verläuft. Die Normale der Hilfsfläche bestimmt eine Aufbaurichtung. Ein insbesondere kegelformartiges Störkonturvolumen des Prozesskopfs wird bestimmt und im Bereich der Auftrefffläche in Aufbaurichtung platziert und mit dem Modellvolumen benachbart der Auftrefffläche geschnitten. Es werden bei dem so entstehenden Schnittvolumen, als Ersetzungsvolumen bezeichnet, nur Punkte mit Distanzwerten kleiner oder gleich dem Distanzwert der Auftrefffläche berücksichtigt. In dem Ersetzungsvolumen werden in Aufbaurichtung die Distanzwerte beginnend mit dem Distanzwert der Auftrefffläche sequentiell erhöht.

In vorteilhafter Weiterbildung der Erfindung wird die Anwendbarkeit der Wahl einer Hilfsfläche und der Aufbaurichtung in einer eigenen Kollisionsprüfung geprüft. Bei detektierter Kollision wird eine andere Kante des Hüllkörpers zur Bestimmung der Hilfsfläche und der Aufbaurichtung gewählt.

In einer Weiterbildung des Verfahrens wird überprüft, ob in Aufbaurichtung unmittelbar benachbart des besagten Ersetzungsvolumens gelegene Volumina mit kleineren Distanzwerten als denen in der Auftrefffläche angeordnet sind. In diesem Fall wird das Störkonturvolumen im Bereich dieser Volumina in Aufbaurichtung platziert und mit dem Modellvolumen, wiederum mit kleineren Distanzwerten als denen in der Auftrefffläche, geschnitten. Dies wird solange fortgeführt bis keine neuen Schnittvolumina mehr erzeugt werden. In der Vereinigung dieser weiteren Schnittvolumen werden in Aufbaurichtung die Distanzwerte beginnend mit dem um 1 erhöhten Distanzwert des höchsten Distanzwerts des Ersetzungsvolumens ersetzt und sequentiell erhöht.

In vorteilhafter Weiterbildung der Erfindung werden alle Distanzwerte, außerhalb des bisher betrachteten Ersetzungsvolumens und der weiteren identifizierten Schnittvolumina, mit einem Distanzwert größer oder gleich dem Distanzwert der Auftrefffläche, um einen Wert erhöht, der um 1 größer ist als die Anzahl der in dem Ersetzungsvolumen und in den weiteren Schnittvolumina durch die Änderung der Distanzwerte geänderten Isoflächen.

Durch die Zuordnung der Distanzwerte ergibt sich eine Reihenfolge von Isoflächen bzw. Schichten, die mittels des additiven Fertigungsverfahrens hergestellt werden können. Diese Zuordnung der Schichten bzw. die Anpassung der Isoflächen erfolgt automatisch durch das erfindungsgemäße Verfahren, so dass beispielsweise Überhänge über Öffnungen in einem Volumen selbsttätig geschlossen werden können.

Prinzipiell ist das Verfahren unabhängig von der Definition der Distanzfunktion. Die Distanzfunktion zur Bestimmung eines Distanzfeldes kann mittels des minimalen Abstandes zwischen zwei Punkten innerhalb des Volumens des digitalen Modells berechnet werden. Bei diskreten Volumenelementen in Form von Voxel wird den direkt benachbarten Voxel oder einer Teilmenge der direkt benachbarten Voxel die Distanz 1 zugeordnet. Die Distanzen zu anderen Voxel berechnen sich aus der minimalen Summe der Distanzen über jeweils benachbarte Voxel zwischen den betrachteten Voxel. Beispielsweise kann allen benachbarten Voxel mit einer gemeinsamen Fläche der Distanzwert 1 zugeordnet werden. Alternativ kann allen benachbarten Voxel mit einem gemeinsamen Eckpunkt der Distanzwert 1 zugeordnet werden.

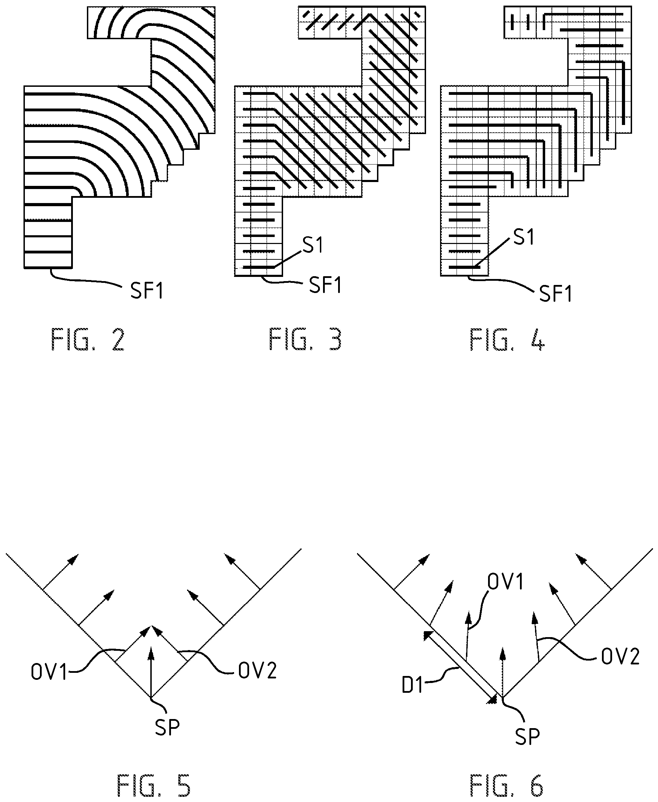

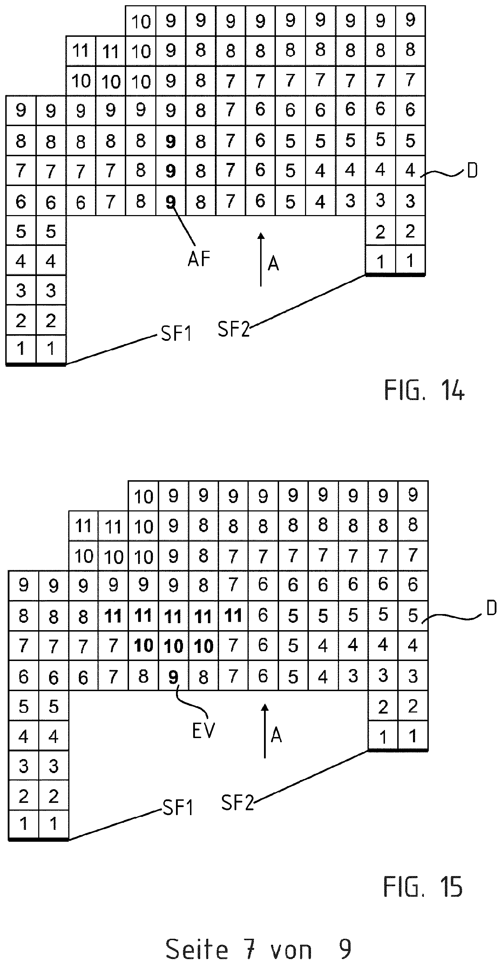

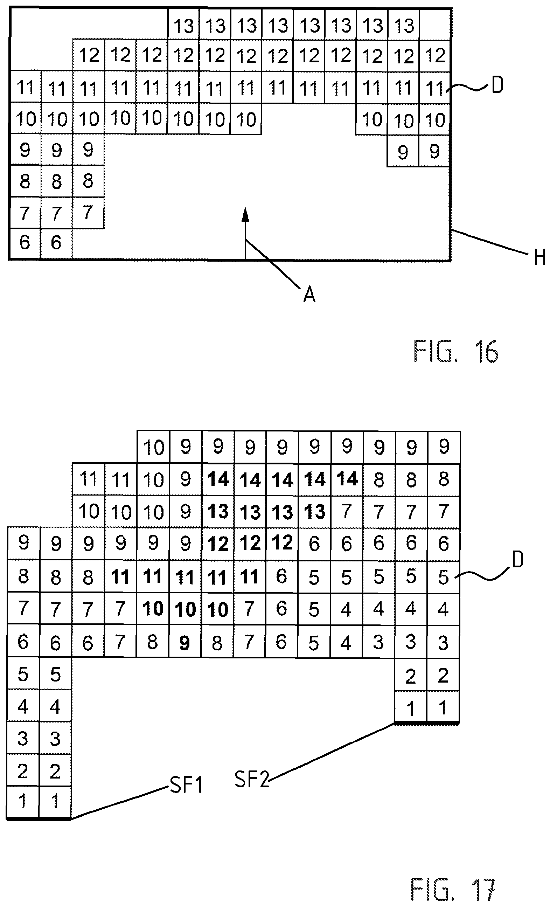

Das erfindungsgemäße Verfahren wird im Folgenden am Beispiel einer diskretisierten Volumen- und Flächenrepräsentation anhand von in den schematischen Zeichnungen dargestellten Ausführungsbeispielen näher erläutert. Es ist prinzipiell aber auch auf nicht-diskretisierte parametrische Volumina und Flächen, wie in Figur 2, anwendbar.

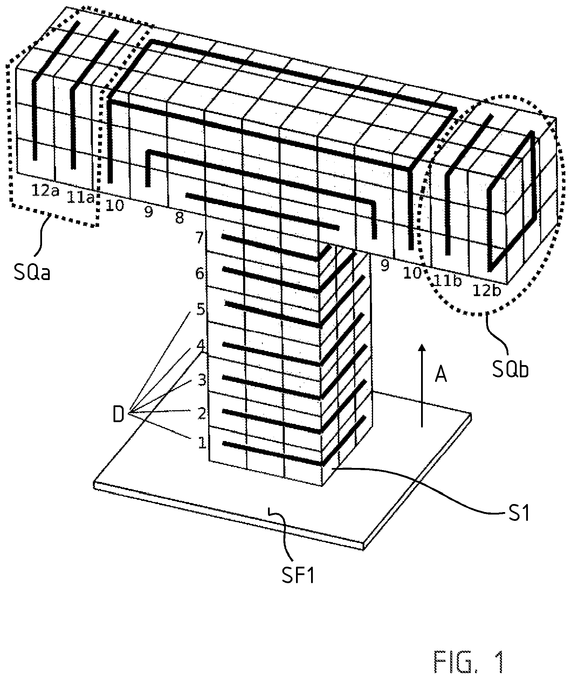

Figur 1 zeigt das Ergebnis einer Geometriezerlegung und Definition der Schichtreihenfolge. Der T-förmige Volumenkörper besitzt eine Startschicht S1 mit dem Distanzwert D=1 auf einer Startfläche SF1. Die darauf folgenden Schichten sind Schichten mit gleichem Abstand. Sie haben jeweils um 1 erhöhte Distanzwerte D, so dass die Schichten aufeinander aufbauen. Die auf die Startschicht S1 folgenden Schichten werden nachfolgend anhand ihres Distanzwertes D benannt. Mit der 8. Schicht kommt es in Aufbaurichtung AR betrachtet zu einem seitlichen Überhang gegenüber der 7. Schicht. Der Überhang um 1 Voxel bzw. Volumenelement kann abhängig von dem additiven Fertigungsverfahren und den eingesetzten Materialien noch ohne Unterstützung von unten möglich sein. Für die nächste, mit dem Distanzwert 9 bezeichnete Schicht wäre üblicherweise schon eine Stützstruktur notwendig. Bei dem erfindungsgemäßen Verfahren ist dies jedoch nicht erforderlich, weil die mit 9 bezeichnete Schicht sich an die Form der mit 8 bezeichneten Schicht anpasst, also adaptiert, und durch die Umlenkung im Eckbereich ohne Unterstützung hergestellt werden kann. Dies ist durch eine Umorientierung des Prozesskopfes bzw. durch Anpassung der Orientierungsvektoren möglich. Es wird ein Überhang geschaffen, der ohne Stützstruktur auskommt, indem durch Anpassung der Orientierungsvektoren des Prozesskopfs die aktuell zu druckende Schicht auf die jeweilige Vorgängerschicht appliziert wird. Die Vorgängerschicht bildet damit ausschließlich das Drucksubstrat, nicht eine etwaige Stützstruktur. Eine Stützstruktur ist trotz des beidseitigen Überhanges nicht erforderlich.
Die Figuren 2 bis 4 zeigen unterschiedliche Möglichkeiten des Schichtaufbaus mit unterschiedlichen Distanzfunktionen in einer zweidimensionalen Darstellung. Figur 2 zeigt Isoflächen bzw. Schichten einer kontinuierlichen Distanzfunktion als minimalen Abstand innerhalb des Bauteilvolumens.
Figur 3 zeigt ein in Voxel diskretisiertes Bauteilvolumen, mit einer Distanzfunktion, bei der allen benachbarten Voxel mit einer gemeinsamen Fläche (in der zweidimensionalen Darstellung entspricht dies einer gemeinsamen Kante) der Distanzwert 1 zugeordnet wird.
Figur 4 zeigt ein in Voxel diskretisiertes Bauteilvolumen, mit einer Distanzfunktion, bei der allen benachbarten Voxel mit einem gemeinsamen Eckpunkt der Distanzwert 1 zugeordnet wird.
   Die Anzahl der zum Modellaufbau genutzten Isoflächen ergibt sich aus einem Parameter, der angibt, in wie viele Stufen das Distanzfeld diskretisiert wird. Die Anzahl der Isoflächen aus denen jeweils die Schichten erzeugt werden wird durch einen Auflösungsparameter bestimmt (Quantisierung der Isoflächen). Die Form und Verteilung der Isoflächen bzw. Schichten wird an beliebige Bauteilformen adaptiert. Die Reihenfolge der Isoflächen bzw. Schichten zum Modellaufbau durch den additiven Fertigungsprozess ergibt sich automatisch aus den Distanzwerten der Isoflächen bzw. Schichten, beginnend bei dem kleinsten Distanzwert in aufsteigender Reihenfolge.
Die Figuren 5 und 6 zeigen eine beispielhafte Darstellung für die Modifizierung der Orientierungsvektoren des Prozesskopfes. In Figur 5 ist zu erkennen, dass die Orientierungsvektoren OV1, OV2 einzelner Voxel aufeinander zu zeigen. Bei dem erfindungsgemäßen Verfahren werden Scheitelpunkte SP bestimmt, bei denen dies für benachbarte diskrete Punkte zutrifft. Die Scheitelpunkte sind berechenbar über das Skalarprodukt der beiden Richtungsvektoren. Figur 6 zeigt, dass die Richtungen der Orientierungsvektoren OV1, OV2 der diskreten Punkte relativ zu den Scheitelpunkten SP gedreht werden, wobei der Anteil der Umorientierung in Abhängigkeit der Distanz D1 zum jeweiligen Scheitelpunkt SP gewählt wird und die Richtung der Orientierung durch zusätzliche Parameter definiert werden kann. Mit zunehmendem Abstand D1 nimmt der Anteil der Umorientierung ab.
   Abhängig von der Bauteilgeometrie kann bei dem Verfahren der Geometriezerlegung eine Aufteilung in Schichten vorkommen, die aufgrund von Kollisionen eines Prozesskopfes mit zuvor erzeugten Schichten nicht mehr realisierbar sind. Dies kann im Wesentlichen bei Bauteilen mit Löchern, Hohlräumen oder mehreren Startflächen auftreten.

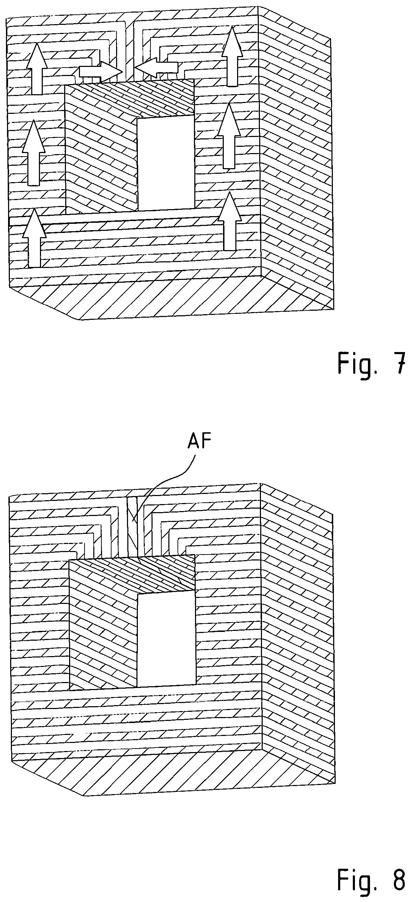

Figur 7 zeigt ein Beispiel für einen Quader mit einem durchgehenden Loch. Für die Schichten oberhalb des Durchganges, d. h. oberhalb des Loches, zeigen die durch Pfeile symbolisierten Normalen der Schichten zueinander, in Richtung der gegenüberliegenden Geometrie. Bei Ausrichtung der Prozesskopforientierung an den Normalen der Schichten ergibt sich im Modellierungsprozess eine Kollision des Prozesskopfs mit zuvor bereits modellierten Bauteilschichten. Zur Vermeidung solcher Situationen muss das Distanzfeld angepasst werden.
   Alle Punkte deren benachbarte Punkte gegenläufige Vektoren des Vektorfeldes aufweisen, bilden die Auftrefffläche (AF) (Figur 8). Die obere, in der Bildebene vertikale, zentrale Schicht ist eine solche Auftrefffläche, als Ergebnis zweier aufeinander zulaufender Schichten. Abhängig von der Bauteilgeometrie bilden die Punkte in dieser Schicht eine Fläche oder Linie.

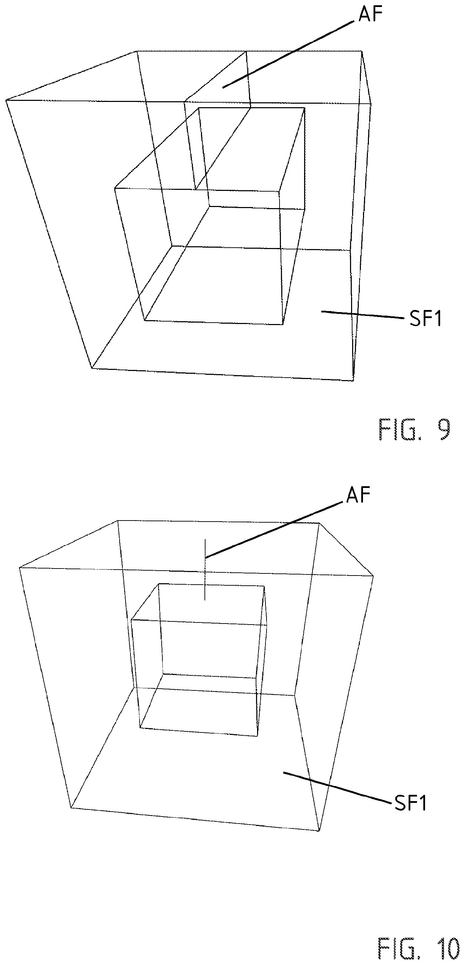

Figur 9 zeigt die entstehende Fläche für das Beispiel des Quaders mit durchgehendem Loch. Figur 10 zeigt die entstehende Linie für den speziellen Fall des Bauteils mit einem symmetrisch geschlossenen Hohlraum. Der Fall der Linie kann als Sonderfall der Fläche betrachtet werden, bei dem die Ausdehnung der Fläche in eine Richtung 0 ist (bzw. genau 1 Voxel). Im Folgenden wird das Vorgehen für die Fläche beschrieben und diese Fläche als Auftrefffläche AF bezeichnet.
   Zunächst wird eine Aufbaurichtung A für die Auftrefffläche AF bestimmt, die aus einer Hilfsfläche HF abgeleitet wird, welche orthogonal zur Auftrefffläche liegt und durch eine Kante der konvexen Hülle oder des achsausgerichteten Hüllkörpers H (Axis-aligned Bounding Boxes) der Auftrefffläche verläuft. Die Aufbaurichtung A entspricht dann der Normalen der Hilfsfläche HF. Zunächst wird beliebig eine Kante gewählt, zum Beispiel zufällig oder anhand eines Parameters, der eine Vorzugsrichtung definiert. Später erfolgt eine Kollisionsprüfung zwischen dem definierten Volumen des Prozesskopfs als Störkonturvolumen mit denjenigen Schichten, die einen kleineren oder gleich großen Distanzwert D haben als die Auftrefffläche AF.

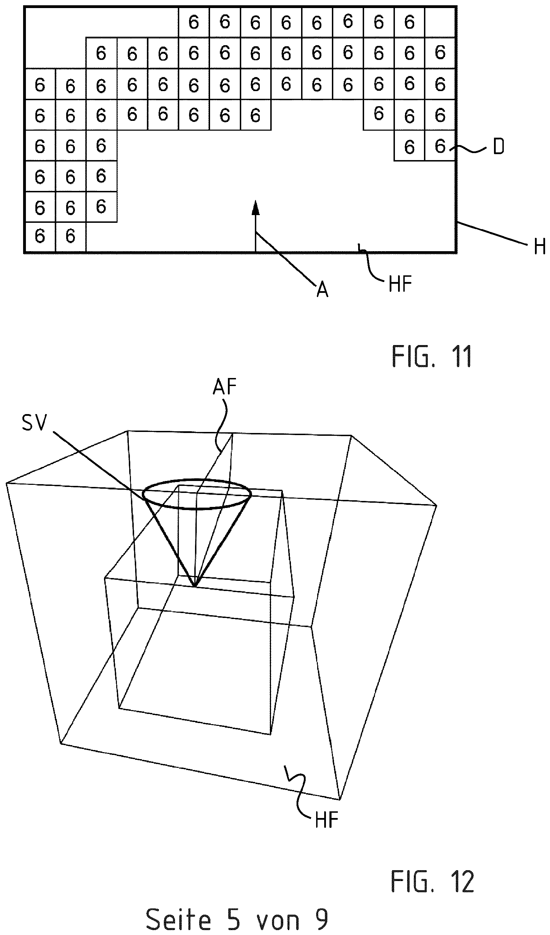

Figur 11 zeigt ein Beispiel für die zweidimensionale Voxeldarstellung der Auftrefffläche AF mit einem achsausgerichteten Hüllkörper und einer aktuell betrachteten Aufbaurichtung A. Die Aufbaurichtung A innerhalb des Hüllkörpers weist in der Bildebene nach oben.
   Im nächsten Schritt wird ein Volumen um die Auftrefffläche AF basierend auf dem definierbaren Störkonturvolumen SV des Prozesskopfs und der gewählten Aufbaurichtung A festgelegt. Das Störkonturvolumen SV wird in diesem Ausführungsbeispiel durch einen Kegel mit einem zu definierenden Öffnungswinkel repräsentiert. Das resultierende Volumen errechnet sich durch die Vereinigung dieser Kegel, ausgerichtet in Aufbaurichtung A, platziert an allen Punkten der Auftrefffläche AF, geschnitten mit dem Volumen aller Voxel mit einer Distanz kleiner als dem Distanzwert der Auftrefffläche AF.

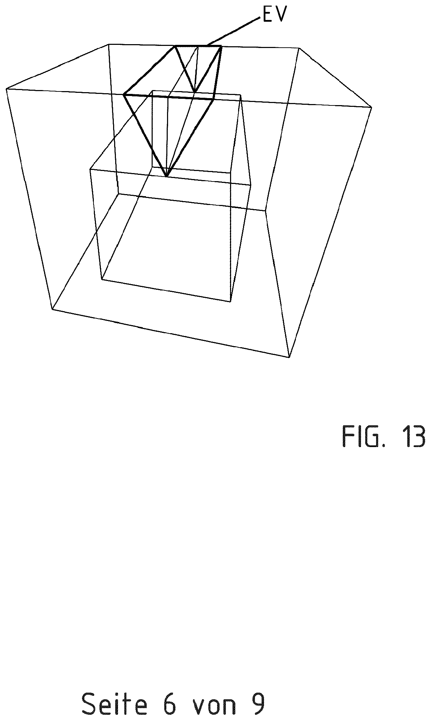

Figur 12 zeigt das Störkonturvolumen SV des Prozesskopfs als Kegel und Figur 13 zeigt das resultierende Schnittvolumen des Kegels, das sogenannte Ersetzungsvolumen EV, bei einer Verlagerung entlang der Auftrefffläche AF.
   Die Distanzwerte D innerhalb des Ersetzungsvolumens werden nun in Aufbaurichtung A ersetzt. Beginnend bei dem bisherigen Distanzwert der Auftrefffläche AF wird dieser schrittweise (pro Voxel) erhöht. Dies ist vergleichbar einem Slicing in ebene Schichten in Aufbaurichtung A. Figur 14 zeigt den Zustand vorher und Figur 15 den Zustand nachher, anhand eines Beispiels in zweidimensionaler Darstellung in Blickrichtung auf eine Kante der Auftrefffläche AF. In Figur 14 sind die Distanzwerte D der Auftrefffläche in Fettschrift dargestellt. In Figur 15 sind die angepassten Distanzwerte D der Voxel des Ersetzungsvolumens EV in Fettschrift dargestellt. Figur 16 zeigt die Ansicht aus Sicht auf die Auftrefffläche für das Beispiel aus Figur 11.

In diesem Ausführungsbeispiel befinden sich, nach dieser Anpassung in Aufbaurichtung unmittelbar benachbart zum Ersetzungsvolumen, Volumina mit Voxel mit einem kleineren Distanzwert D als dem niedrigsten Distanzwert D der Auftrefffläche (siehe Figur 15).

Das Störkonturvolumen SV wird im Bereich dieser Volumina in Aufbaurichtung A platziert und mit dem Modellvolumen, mit kleineren Distanzwerten als denen in der Auftreffflächen AF, geschnitten, welches solange fortgeführt wird, bis keine neuen Schnittvolumina mehr erzeugt werden. In der Vereinigung dieser weiteren Schnittvolumen in Aufbaurichtung A werden, wie in Figur 17 dargestellt, die Distanzwerte D beginnend mit dem um 1 erhöhten Distanzwert D des höchsten Distanzwerts D des Ersetzungsvolumen EV ersetzt und sequentiell erhöht.

Insbesondere anschließend kann eine Kollisionsprüfung mit den bis dahin modellierten Schichten des Bauteilvolumens (Schichten, die einen niedrigeren oder gleich großen Distanzwert wie den Distanzwert der betrachteten Auftrefffläche aufweisen) mit dem Prozesskopf (und ggf. der diesen führenden Kinematik) erfolgen. Die Kollisionsprüfung wird für alle Punkte des errechneten Ersetzungsvolumens und der weiteren berechneten Volumina in denen Distanzwerte geändert wurden mit gewähltem Abtastraster durchgeführt. Wird keine Kollision festgestellt, bleibt die gewählte Aufbaurichtung A bestehen, ansonsten wird eine andere Kante des Hüllkörpers und dadurch eine andere Aufbaurichtung A gewählt und mit den beschriebenen Berechnungsschritten auf Kollisionen überprüft.

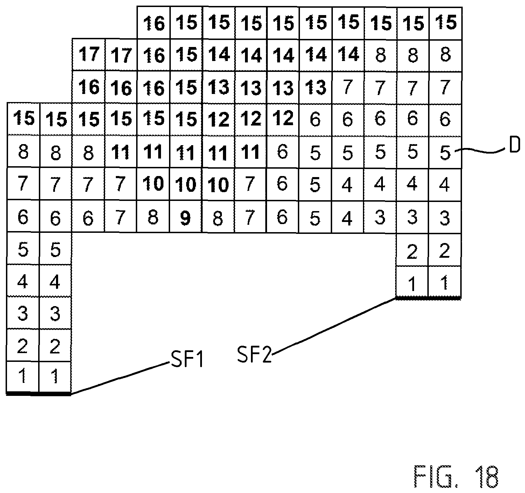

Abschließend werden alle Distanzwerte D der Voxel mit bisher nicht modifizierten Distanzwerten und einem Wert größer oder gleich dem Distanzwert der Auftrefffläche um einen Wert erhöht, der um 1 größer ist als die Anzahl der in dem Ersetzungsvolumen und in den Schnittvolumina durch die Änderung der Distanzwerte geänderten Isoflächen (Figur 18).

## Patentansprüche

1. Verfahren zur additiven Fertigung eines dreidimensionalen Gegenstandes wobei ein digitales Modell des dreidimensionalen Gegenstandes bereitgestellt wird, wobei auf einer Oberfläche des digitalen Modells wenigstens eine Startfläche (SF1, SF2) festgelegt wird und beginnend auf dieser wenigstens einen Startfläche (SF1, SF2) eine schichtweise Unterteilung des Modells erfolgt, wobei die Schichten (S1...Sn) nacheinander additiv zu dem dreidimensionalen Gegenstand aufgebaut werden, **dadurch gekennzeichnet, dass** zur Bestimmung der Lage und Anordnung der Schichten (S1...Sn) wenigstens ein Distanzfeld berechnet wird, das jedem Punkt des Volumens des digitalen Modells gemäß einer zu definierenden Distanzfunktion die kürzeste Distanz zur einer nächstgelegenen Startfläche (SF1, SF2) zuordnet, wobei die Schichten (S1... Sn) jeweils aus wenigstens einer Isofläche bestimmt werden, wobei die Punkte einer Isofläche denselben Distanzwert aufweisen und somit den gleichen Abstand zur nächstgelegenen Startfläche (SF1, SF2) haben, wobei für jeden diskreten Punkt einer durch die Isoflächen des Distanzfelds definierten Schicht (S1... Sn) eine Orientierung eines Prozesskopfs bestimmt wird, indem entweder die Flächennormale der Schicht (S1... Sn) berechnet wird oder die Gradientenvektoren des Distanzfeldes berechnet werden, welche für den diskreten Punkt die Richtung des steilsten Anstiegs der Distanzen zeigen, wobei sich die Form und Verteilung der Isoflächen und Schichten (S1... Sn) an die Form des digitalen Modells adaptieren und wobei die Distanzwerte der Isoflächen die Reihenfolge der Schichten für den additiven Aufbau vorgeben.

2. Verfahren nach Anspruch 1, **dadurch gekennzeichnet, dass** die Distanzwerte der Isoflächen die Reihenfolge der Schichten für den additiven Aufbau vorgeben, beginnend mit dem niedrigsten Distanzwert (D) in aufsteigender Reihenfolge.

3. Verfahren nach Anspruch 1 oder 2, **dadurch gekennzeichnet, dass** die Anzahl der zum Modellaufbau genutzten Isoflächen durch einen zuvor festgelegten Auflösungsparameter bestimmt wird.

4. Verfahren nach einem der Ansprüche 1 bis 3, **dadurch gekennzeichnet, dass** die Anzahl der Isoflächen, aus denen jeweils die Schichten erzeugt werden, durch einen weiteren Auflösungsparameter bestimmt wird.

5. Verfahren nach einem der Ansprüche 1 bis 4, **dadurch gekennzeichnet, dass** für bestimmte diskrete Punkte die Richtung ihrer Orientierungsvektoren (OV1, OV2) modifiziert wird, indem Scheitelpunkte (SP) bestimmt werden, an denen die bisher ermittelten Orientierungsvektoren (OV1, OV2) benachbarter, diskreter Punkte aufeinander zu zeigen, und die Richtung dieser Orientierungsvektoren (OV1, OV2) relativ zu den Scheitelpunkten (SP) gedreht werden, wobei der Anteil der Umorientierung in Abhängigkeit der Distanz zum jeweiligen Scheitelpunkt (SP) gewählt wird und mit zunehmendem Abstand (D1) vom Scheitelpunkt (SP) abnimmt.

6. Verfahren nach einem der Ansprüche 1 bis 5, **dadurch gekennzeichnet, dass** zur Vermeidung einer Kollision eines verwendeten Prozesskopfs für die additive Fertigung mit einem bereits modellierten Bauteilvolumen die Schichtbildung angepasst wird, indem überprüft wird, ob es gegenläufige Orientierungsvektoren (OV1, OV2) gibt, wodurch Isoflächen aufeinander zu laufen und eine Auftrefffläche (AF) bilden.

7. Verfahren nach Anspruch 6, **dadurch gekennzeichnet, dass** bei vorhandener Auftrefffläche (AF) das Distanzfeld unabhängig von der Distanzfunktion lokal modifiziert wird, indem eine orthogonal zur Auftrefffläche (AF) angeordnete Hilfsfläche (HF) bestimmt wird, welche durch eine Kante eines das digitale Modell der Auftrefffläche (AF) umgebenden Hüllkörpers (H) verläuft und dessen Normale eine Aufbaurichtung (A) bestimmt, wobei ein Störkonturvolumen (SV) des Prozesskopfs bestimmt wird und im Bereich der Auftrefffläche (AF) in Aufbaurichtung (A) platziert und mit dem Modellvolumen benachbart der Auftrefffläche (AF) geschnitten wird, wobei für das so entstehende Schnittvolumen nur Punkte mit Distanzwerten kleiner oder gleich der Distanzwerte der Auftrefffläche (AF) berücksichtigt werden und sich ein Ersetzungsvolumen (EV) ergibt und wobei im Ersetzungsvolumen (EV) in Aufbaurichtung (A) die Distanzwerte (D) beginnend mit dem Distanzwert (D) der Auftrefffläche (AF) sequentiell erhöht werden, mit einer Schrittweite entsprechend des Auflösungsparameters der Isoflächen.

8. Verfahren nach Anspruch 7, **dadurch gekennzeichnet, dass** überprüft wird, ob in Aufbaurichtung (A) unmittelbar benachbart des besagten Ersetzungsvolumens (EV) gelegene Volumina mit kleineren Distanzwerten (D) als denen der Auftrefffläche (AF) angeordnet sind und in diesem Fall das Störkonturvolumen (SV) im Bereich dieser Volumina in Aufbaurichtung (A) platziert und mit diesen Volumina geschnitten wird, welches solange fortgeführt wird, bis keine neuen Schnittvolumina mehr erzeugt werden, wobei in der Vereinigung dieser weiteren Schnittvolumen in Aufbaurichtung (A) die Distanzwerte (D) beginnend mit dem um 1 erhöhten Distanzwert (D) des höchsten Distanzwerts (D) des Ersetzungsvolumen (EV) ersetzt und sequentiell erhöht werden, mit einer Schrittweite entsprechend des Auflösungsparameters der Isoflächen.

9. Verfahren nach Anspruch 7 oder 8, **dadurch gekennzeichnet, dass** die Anwendbarkeit der Wahl einer Hilfsfläche (HF) und der Aufbaurichtung (A) in einer Kollisionsprüfung geprüft wird und bei detektierter Kollision eine andere Kante zur Bestimmung des Hilfsfläche (HF) und der Aufbaurichtung (A) gewählt wird.

10. Verfahren nach einem der Ansprüche 7 bis 9, **dadurch gekennzeichnet, dass** alle Distanzwerte (D), außerhalb des genannten Ersetzungsvolumens (EV) und der Schnittvolumina, mit einem Distanzwert (D) größer oder gleich dem Distanzwert (D) der Auftrefffläche (AF) um einen Wert erhöht werden, der um 1 größer ist als die Anzahl der in dem Ersetzungsvolumen und in den Schnittvolumina durch die Änderung der Distanzwerte geänderten Isoflächen.

11. Verfahren nach einem der Ansprüche 1 bis 10, **dadurch gekennzeichnet, dass** als digitales Modell ein diskretisiertes Voxelmodell verwendet wird oder ein parametrisches Modell, das erforderlichenfalls bereichsweise diskretisiert wird.

12. Verfahren nach einem der Ansprüche 1 bis 11, **dadurch gekennzeichnet, dass** die Distanzfunktion zur Bestimmung eines Distanzfeldes mittels des minimalen Abstandes zwischen zwei Punkten innerhalb des Volumens des digitalen Modells berechnet wird oder bei diskreten Volumenelementen in Form von Voxel den direkt benachbarten Voxel oder einer Teilmenge der direkt benachbarten Voxel die Distanz 1 zugeordnet wird und sich Distanzen zu anderen Voxel aus der minimalen Summe über jeweils benachbarte Voxel zwischen den betrachteten Voxel berechnen.

## Claims

1. Method for additive manufacture of a three-dimensional object wherein a digital model of the three-dimensional object is provided, wherein at least one starting area (SF1, SF2) is defined on a surface of the digital model and, beginning on said at least one starting area (SF1, SF2), a layered subdivision of the model takes place, wherein the layers (SI to Sn) are successively built up additively to produce the three-dimensional object, **characterised in that**, in order to determine the positioning and arrangement of the layers (SI to Sn), at least one distance field is calculated, which assigns to each point of the digital model volume, according to a defining distance function, the shortest distance to a nearest starting area (SF1, SF2), wherein the layers (SI to Sn) are each determined from at least one isosurface, wherein the points of an isosurface have the same distance value and thus have the same distance to the nearest starting area (SF1, SF2), wherein, for each discrete point of a layer (S1 to Sn) defined by the isosurfaces of the distance field, an orientation of the processing head is determined, wherein either the surface normal of the layer (S1 to Sn) is calculated or the gradient vectors of the distance field are calculated, which show the direction of the steepest rise in the distances for the discrete point, wherein the shape and distribution of the isosurfaces and layers (S1 to Sn) are adapted to the shape of the digital model and wherein the distance values of the isosurfaces predetermine the sequence of the layers for additive construction.

2. Method according to claim 1, **characterised in that** the distance values of the isosurfaces predetermine the sequence of the layers for additive construction, beginning with the lowest distance value (D) in ascending order.

3. Method according to claim 1 or 2, **characterised in that** the number of isosurfaces used for model construction is determined by a predetermined expansion parameter.

4. Method according to any of claims 1 to 3, **characterised in that** the number of isosurfaces, from which each of the layers is created, is determined by a further expansion parameter.

5. Method according to any of claims 1 to 4, **characterised in that**, for certain discrete points, the direction of their orientation vectors (OV1, OV2) is modified, wherein the vertices (SP) are determined, at which the previously determined orientation vectors (OV1, OV2) for adjacent, discrete points point at each other, and the direction of these orientation vectors (OV1, OV2) is rotated relative to the vertices (SP), wherein the percentage reorientation is selected depending on the distance to the respective vertex (SP) and decreases with an increasing distance (01) from the vertex (SP).

6. Method according to any of claims 1 to 5, **characterised in that**, in order to prevent a collision of a processing head used for additive manufacture with an already modelled component volume, the layer formation is adapted, wherein it is checked whether there are opposed orientation vectors (OV1, OV2), whereby isosurfaces run on top of each other and form an impact surface (AF).

7. Method according to claim 6, **characterised in that**, where there is an impact surface (AF), the distance field is modified locally independent of the distance function, wherein an auxiliary surface (HF) arranged orthogonally to the impact surface (AF) is determined, which passes through an edge of an enveloping body (H) surrounding the digital model of the impact surface (AF) and the normal of which determines a construction direction (A), wherein an interference contour volume (SV) of the processing head is determined and placed in the region of the impact surface (AF) in the construction direction (A) and intersected with the model volume adjacent to the impact surface (AF), wherein, for the resulting intersection volume, only points with distance values less than or equal to the distance values of the impact surface (AF) are taken into account and a replacement volume (EV) arises and wherein the distance values (D) in the construction direction (A) within the replacement volume (EV), beginning with the distance value (D) of the impact surface (AF), are sequentially increased, with an increment according to the expansion parameter of the isosurfaces.

8. Method according to claim 7, **characterised in that**, it is checked whether volumes located in the construction direction (A) with lower distance values (D) than those of the impact surface (AF) are arranged directly adjacent to said replacement volume (EV) and, in this case, the interference contour volume (SV) is placed in the region of these volumes in the construction direction (A) and intersected with these volumes, which is continued until no new intersection volumes are created, wherein, in the combination of these further intersection volumes in the construction direction (A), the distance values (D), beginning with the distance value (D) plus 1 of the highest distance value (D) of the replacement volume (EV), are replaced and sequentially increased, with an increment according to the expansion parameter of the isosurfaces.

9. Method according to claim 7 or 8, **characterised in that** the applicability of selecting an auxiliary surface (HF) and the construction direction (A) is checked in a collision test and, should a collision be detected, another edge is selected for determining the auxiliary surface (HF) and the construction direction (A).

10. Method according to any of claims 7 to 9, **characterised in that** all the distance values (D), outside the aforementioned replacement volume (EV) and the intersection volumes, with a distance value (D) greater than or equal to the distance value (D) of the impact surface (AF), are increased by a value, which is 1 more than the number of modified isosurfaces in the replacement volume and in the intersection volumes, by modifying the distance values.

11. Method according to any of claims 1 to 10, **characterised in that** a discretized voxel model or a parametric model, which is discretized in parts, if necessary, is used as the digital model.

12. Method according to any of claims 1 to 11, **characterised in that** the distance function for determining a distance field is calculated by means of the minimum distance between two points within the volume of the digital model or, for discrete volume elements in the form of voxels, the distance 1 is assigned to the directly adjacent voxel or a subset of the directly adjacent voxel and distances to other voxels are calculated from the minimum sum, using adjacent voxels in each case, between the voxels in question.

## Revendications

1. Procédé de fabrication additive d'un objet tridimensionnel, dans lequel un modèle numérique de l'objet tridimensionnel est mis à disposition, dans lequel au moins une surface de départ (SF1, SF2) est définie sur une surface du modèle numérique et, en commençant par cette au moins une surface de départ (SF1, SF2), une subdivision du modèle en couches a lieu, dans lequel les couches (Sl...Sn) sont construites les unes après les autres de manière additive pour former l'objet tridimensionnel, **caractérisé en ce que**, pour déterminer la position et l'agencement des couches (Sl...Sn), au moins un champ de distance est calculé, lequel attribue à chaque point du volume du modèle numérique la distance la plus courte à une surface de départ la plus proche (SF1, SF2) selon une fonction de distance définie, dans lequel les couches (Sl...Sn) sont déterminées respectivement à partir d'au moins une isosurface, dans lequel les points d'une isosurface présentent la même valeur de distance et ont ainsi le même écart par rapport à la surface de départ la plus proche (SF1, SF2), dans lequel pour chaque point discret d'une couche (Sl...Sn) définie par les isosurfaces du champ de distance, une orientation d'une tête de processus est déterminée soit en calculant la normale de surface de la couche (S1...Sn), soit en calculant les vecteurs de gradient du champ de distance, lesquels indiquent pour le point discret la direction de la plus forte augmentation des distances, dans lequel la forme et la répartition des isosurfaces et des couches (Sl...Sn) s'adaptent à la forme du modèle numérique et dans lequel les valeurs de distance des isosurfaces prédéterminent l'ordre des couches pour la construction additive.

2. Procédé selon la revendication 1, **caractérisé en ce que** les valeurs de distance des isosurfaces prédéterminent l'ordre des couches pour la construction additive, en commençant par la valeur de distance la plus faible (D) dans l'ordre croissant.

3. Procédé selon la revendication 1 ou 2, **caractérisé en ce que** le nombre des isosurfaces utilisées pour construire le modèle est déterminé par un paramètre de résolution préalablement défini.

4. Procédé selon l'une quelconque des revendications 1 à 3, **caractérisé en ce que** le nombre d'isosurfaces à partir desquelles respectivement les couches sont générées est déterminé par un paramètre de résolution supplémentaire.

5. Procédé selon l'une quelconque des revendications 1 à 4, **caractérisé en ce que**, pour certains points discrets, la direction de leurs vecteurs d'orientation (OV1, OV2) est modifiée en déterminant des sommets (SP) auxquels les vecteurs d'orientation (OV1, OV2) identifiés jusqu'ici de points discrets adjacents pointent les uns vers les autres et la direction de ces vecteurs d'orientation (OV1, OV2) est tournée par rapport aux sommets (SP), dans lequel la proportion de la réorientation est choisie en fonction de la distance par rapport au sommet respectif (SP) et diminue avec l'augmentation de la distance (D1) par rapport au sommet (SP).

6. Procédé selon l'une quelconque des revendications 1 à 5, **caractérisé en ce que**, pour éviter une collision entre une tête de processus utilisée pour la fabrication additive et un volume de composant déjà modélisé, la formation de couche est ajustée en vérifiant s'il existe des vecteurs d'orientation opposés (OV1, OV2), de sorte que des isosurfaces se rapprochent les unes des autres et forment une surface d'impact (AF).

7. Procédé selon la revendication 6, **caractérisé en ce que** le champ de distance est localement modifié indépendamment de la fonction de distance lorsqu'une surface d'impact (AF) est présente, en déterminant une surface auxiliaire (HF) agencée de manière orthogonale à la surface de contact (AF), laquelle passe par un bord d'un corps enveloppe (H) entourant le modèle numérique de la surface d'impact (AF) et dont la normale détermine une direction de construction (A), dans lequel un volume de contour parasite (SV) de la tête de processus est déterminé et placé dans la zone de la surface d'impact (AF) dans la direction de construction (A) et est coupé avec le volume du modèle adjacent à la surface d'impact (AF), dans lequel, pour le volume de coupe apparaissant, seuls les points dont les valeurs de distance sont inférieures ou égales aux valeurs de distance de la surface d'impact (AF) sont pris en compte et un volume de remplacement (EV) en résulte et dans lequel, dans le volume de remplacement (EV) dans la direction de construction (A), les valeurs de distance (D) sont augmentées séquentiellement en commençant par la valeur de distance (D) de la surface d'impact (AF), avec une largeur de pas correspondant au paramètre de résolution des isosurfaces.

8. Procédé selon la revendication 7, **caractérisé en ce qu'**on vérifie si des volumes présentant des valeurs de distance (D) inférieures à celles de la surface d'impact (AF) sont agencés ou non de manière directement adjacente audit volume de remplacement (EV) dans la direction de construction (A) et, dans ce cas, le volume de contour parasite (SV) est placé dans la zone de ces volumes dans la direction de construction (A) et est coupé par ces volumes, ce qui se poursuit jusqu'à ce que plus aucun nouveau volume de coupe ne soit généré, dans lequel, dans l'association de ces volumes de coupe supplémentaires dans la direction de construction (A), les valeurs de distance (D), en commençant par la valeur de distance (D) augmentée de 1, de la valeur de distance (D) la plus élevée du volume de remplacement (EV) sont remplacées et augmentées séquentiellement, avec une largeur de pas correspondant au paramètre de résolution des isosurfaces.

9. Procédé selon la revendication 7 ou 8, **caractérisé en ce que** l'applicabilité du choix d'une surface auxiliaire (HF) et de la direction de construction (A) est vérifiée dans le cadre d'un contrôle de collision et qu'en cas de collision détectée, un autre bord est choisi pour déterminer la surface auxiliaire (HF) et la direction de construction (A).

10. Procédé selon l'une quelconque des revendications 7 à 9, **caractérisé en ce que** toutes les valeurs de distance (D), en dehors dudit volume de remplacement (EV) et des volumes de coupe, dont la valeur de distance (D) est supérieure ou égale à la valeur de distance (D) de la surface d'impact (AF), sont augmentées d'une valeur qui est supérieure de 1 au nombre d'isosurfaces modifiées dans les volumes de remplacement et dans les volumes de coupe par la modification des valeurs de distance.

11. Procédé selon l'une quelconque des revendications 1 à 10, **caractérisée en ce qu'**un modèle de voxel discrétisé est utilisé comme modèle numérique ou un modèle paramétrique qui est, le cas échéant, discrétisé par zones.

12. Procédé selon l'une quelconque des revendications 1 à 11, **caractérisé en ce que** la fonction de distance pour déterminer un champ de distance est calculée au moyen de la distance minimale entre deux points à l'intérieur du volume du modèle numérique ou, dans le cas d'éléments volumiques discrets sous forme de voxels, la distance 1 est attribuée aux voxels directement adjacents ou à un sous-ensemble de voxels directement adjacents et les distances par rapport aux autres voxels peuvent être calculées à partir de la somme minimale sur les voxels adjacents entre les voxels considérés.
